# EUROPÄISCHE PATENTSCHRIFT

(11) **EP 1 791 710 B1**
(45) Veröffentlichungstag und Bekanntmachung des Hinweises auf die Patenterteilung: **21.01.2009**
(21) Anmeldenummer: 05787415.8
(22) Anmeldetag: 09.09.2005
(51) Int. Cl.: B60J 7/20, B62D 25/10, B62D 25/24

(54) **CABRIOLET-FAHRZEUG MIT MITTELMOTOR**
MID-ENGINED CONVERTIBLE
VEHICULE CABRIOLET A MOTEUR MOYEN

(30) Priorität: 09.09.2004 DE 102004044442
(43) Veröffentlichungstag der Anmeldung: 06.06.2007
(73) Patentinhaber: Wilhelm Karmann GmbH, 49084 Osnabrück (DE)
(72) Erfinder: WEISS, Lorenz, 49492 Westerkappeln (DE); SCHULZ, Robert, 49090 Osnabrück (DE)
(86) Internationale Anmeldenummer: PCT/DE2005/001577
(87) Internationale Veröffentlichungsnummer: WO 2006/026979

(56) Entgegenhaltungen:
- DE-A1- 19 813 092
- US-A- 4 712 828
- US-A- 5 513 891
- PATENT ABSTRACTS OF JAPAN Bd. 017, Nr. 472 (M-1470), 27. August 1993 (1993-08-27) -& JP 05 112255 A (SUZUKI MOTOR CORP), 7. Mai 1993 (1993-05-07)

## Beschreibung

Die vorliegende Erfindung betrifft ein Cabriolet-Fahrzeug gemäß dem Oberbegriff von Patentanspruch 1.

Ein Cabriolet-Fahrzeug der eingangs genannten Art, wie z.B ein Porsche Boxster oder ein Rover MG TF weist eine rohbaufeste Verdeckwanne mit Serviceöffnung auf. Besagte Serviceöffnung ist häufig schon für Servicearbeiten nicht ausreichend groß, mit der Folge, dass das Antriebsaggregat oder sogar der Antriebsstrang zur Durchführung der Servicearbeiten ausgebaut werden muss, was nur von unten möglich ist.

US-4 712 828 offenbart ein Cabriolet-Fahrzeug gemäß dem Oberbegriff von Anspruch 1.

Erfindungsgemäß wird diese Aufgabe dadurch gelöst, dass die Verdeckwanne eine Serviceöffnung und ein lösbar befestigbares und/oder schwenkbares plattenförmiges Element zum Verschließen der Serviceöffnung aufweist.

Insbesondere kann dabei vorgesehen sein, dass die Verdeckwanne Teil der Karosseriestruktur ist. Damit ist gemeint, dass die Verdeckwanne zur Steifigkeit der Karosserie beiträgt. Dadurch lässt sich wiederum das Gewicht des Cabriolet-Fahrzeugs weiter reduzieren.

Vorzugsweise ist die Verdeckwanne in die Karosseriestruktur kraftschlüssig eingebunden.

Insbesondere kann dabei vorgesehen sein, dass die Verdeckwanne mit der Karosseriestruktur kraftschlüssig verschraubt ist.

Vorteilhafterweise ist die Verdeckwanne aus geschäumtem Metallwerkstoff hergestellt. Dadurch lässt sich eine Gewichtsreduzierung erzielen.

Schließlich kann insbesondere vorgesehen sein, dass die Verdeckwanne aus Aluminium-Foam-Sandwich (AFS) hergestellt ist.

Wenn gemäß einer besonderen Ausführungsform darüber hinaus die Verdeckwanne Teil der Karosseriestruktur ist, so trägt sie auch noch zur Steifigkeit der Karos-Vorzugsweise ist die Verdeckwanne in die Karosseriestruktur kraftschlüssig eingebunden.

Insbesondere kann dabei vorgesehen sein, daß die Verdeckwanne mit der Karosseriestruktur kraftschlüssig verschraubt ist.

Günstigerweise weist die Verdeckwanne eine Serviceöffnung und ein lösbar befestigbares und/oder schwenkbares plattenförmiges Element zum Verschließen der Serviceöffnung auf.

Vorteilhafterweise ist die Verdeckwanne aus geschäumtem Metallwerkstoff hergestellt. Dadurch läßt sich eine Gewichtsreduzierung erzielen.

Schließlich kann insbesondere vorgesehen sein, daß die Verdeckwanne aus Aluminum-Foam-Sandwich (AFS) hergestellt ist.

Der Erfindung liegt die überraschende Erkenntnis zugrunde, daß durch die demontierbare Gestaltung der Verdeckwanne der Motor leichter zugänglich und von oben ausbaubar ist.

Wenn gemäß einer besonderen Ausführungsform darüber hinaus die Verdeckwanne Teil der Karosseriestruktur ist, so trägt sie auch noch zur Steifigkeit der Karosserie bei, wodurch das Gewicht der Karosserie verringert werden kann.

Weitere Merkmale und Vorteile der Erfindung ergeben sich aus den Ansprüchen und der nachfolgenden Beschreibung, in der ein Ausführungsbeispiel anhand der schematischen Zeichnungen im einzelnen erläutert ist. Dabei zeigt:
- Figur 1: eine perspektivische Ansicht eines Teils ei- ner Karosserie eines Cabriolet-Fahrzeugs mit Mittelmotor gemäß einer besonderen Ausfüh- rungsform der Erfindung in einer Montagephase schräg von vorne;
- Figur 2: ein Detail von Figur 1 nach Montage einer Verdeckwanne;
- Figur 3: eine Ansicht wie Figur 2 nach Entfernen einer Platte von der Verdeckwanne;
- Figur 4: eine Schnittansicht entlang der Linie IV-IV von Figur 2;
- Figur 5: eine Schnittansicht entlang der Linie V-V von Figur 2; und
- Figur 6: eine Schnittansicht entlang der Linie VI-VI von Figur 2.

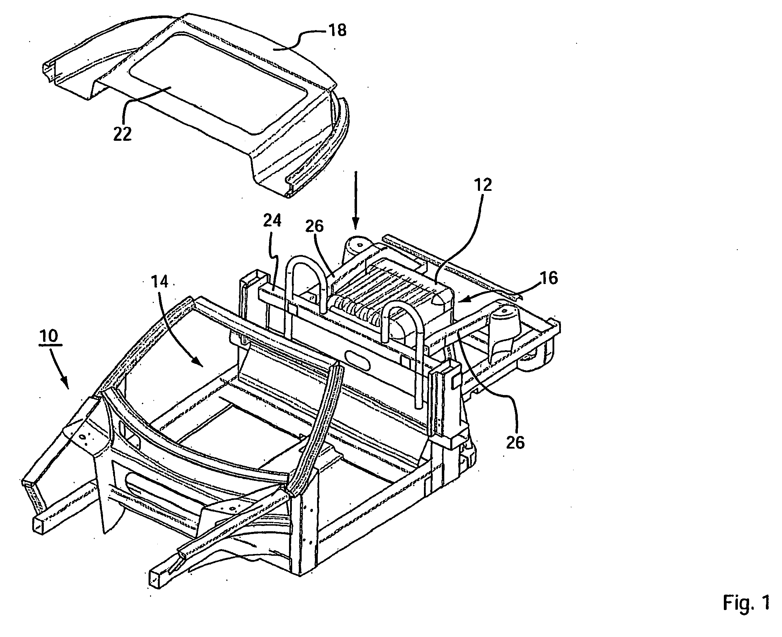

Figur 1 zeigt einen Teil einer Karosserie 10 eines Cabriolet-Fahrzeugs mit Mittelmotor 12. Besagter Teil umfaßt eine Fahrgastzelle 14 und heckseitig dahinter einen Motoraufnahmebereich 16 für den Mittelmotor 12. In Figur 1 wird gezeigt, wie gerade eine Verdeckwanne 18 über dem Mittelmotor 12 montiert werden soll.

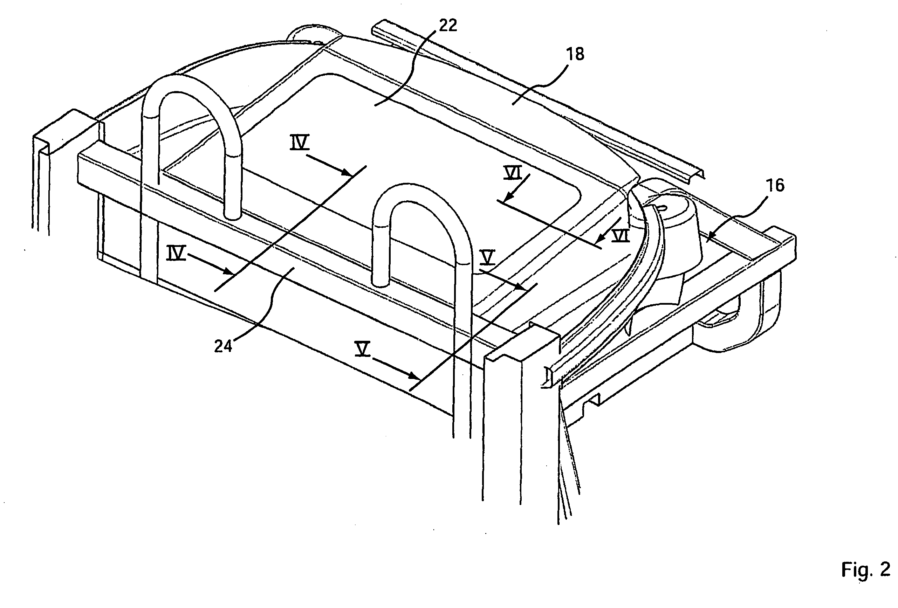

In Figur 2 ist die Verdeckwanne 18 montiert, d. h. kraftschlüssig in die Karosserie (bzw. Karosseriestruktur) 10 eingebunden. Die Verdeckwanne 18 weist eine im wesentlichen rechteckige Serviceöffnung 20 auf, die von einer Platte 22 verschlossen wird. Die Verdeckwanne 18 und die Platte 22 sind derart angeordnet und gestaltet, daß sie gemeinsam den Mittelmotor 12 hinsichtlich Gase abdichten, so daß keine Gase nach oben und insbesondere in die Fahrgastzelle 14 gelangen können.

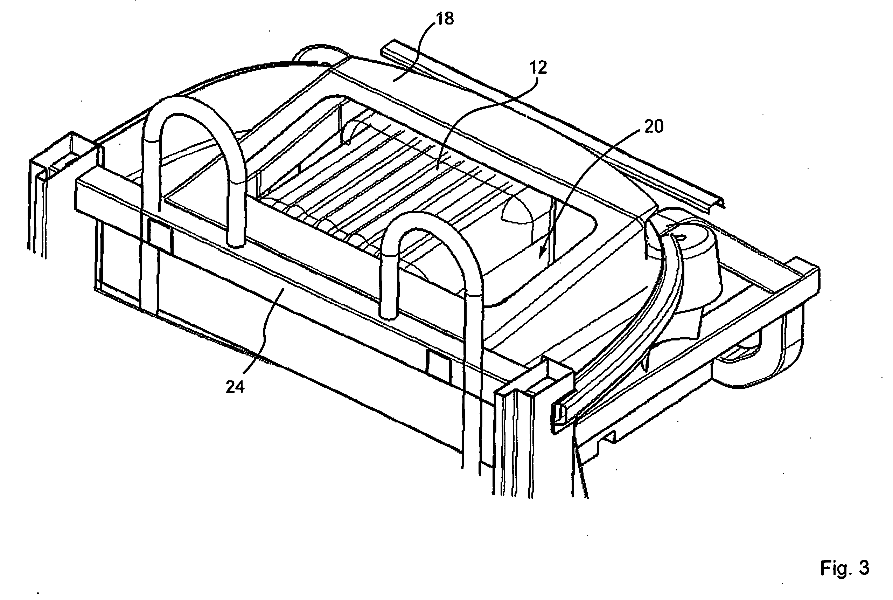

Wie in Figur 3 gezeigt, ist der Mittelmotor 12 bei entfernter Platte 22 durch die Serviceöffnung 20 für kleinere Servicearbeiten gut zugänglich. Für größere Servicearbeiten und für den Ein- und Ausbau des Antriebsaggregats muß lediglich die Verdeckwanne 18 entfernt werden, was mit keinem großen Aufwand verbunden ist.

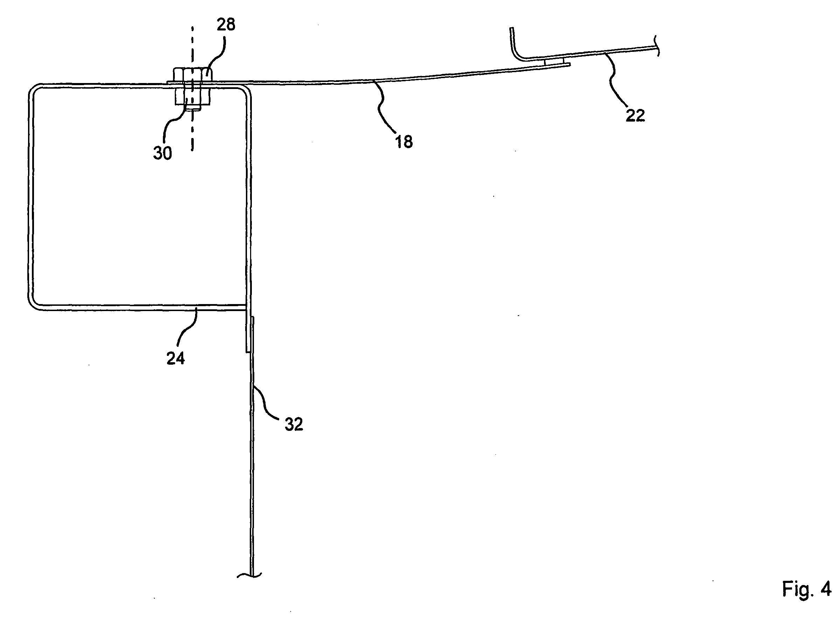

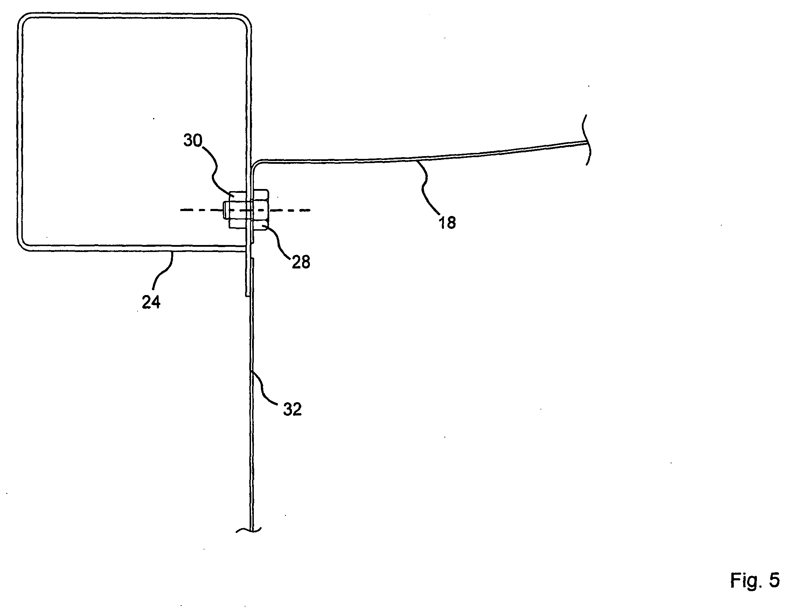

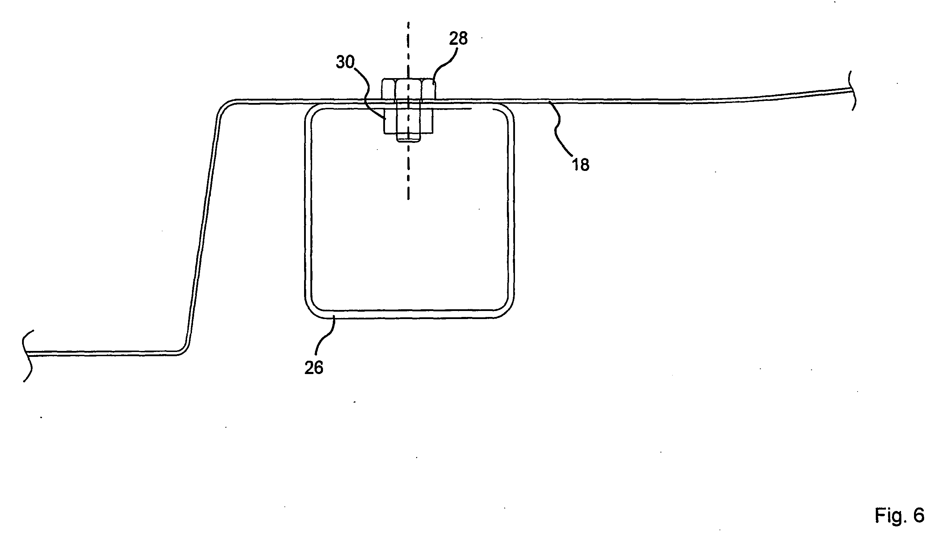

Wie die Figuren 4 bis 6 zeigen, ist die Verdeckwanne 18 kraftschlüssig mit der Karosserie, d. h. mit einem Querträger 24 und Längsträgern 26 lösbar verschraubt. Für die Verschraubungen sind Schrauben 28 und Schweißmuttern 30 vorgesehen.

### Bezugszeichenliste

- 10: Karosserie
- 12: Mittelmotor
- 14: Fahrgastzelle
- 16: Motoraufnahmebereich
- 18: Verdeckwanne
- 20: Serviceöffnung
- 22: Platte
- 24: Querträger
- 26: Längsträger
- 28: Schrauben
- 30: Schweißmutter
- 32: Rückwand

## Patentansprüche

1. Cabriolet-Fahrzeug mit Mittelmotor (12) in einem Motoraufnahmebereich (16), umfassend eine den Motoraufnahmebereich (16) abdeckende Verdeckwanne (18), die an der Karosseriestruktur demontierbar befestigt ist, **dadurch gekennzeichnet, dass** die Verdeckwanne (18) eine Serviceöffnung (20) und ein lösbar befestigbares und/oder schwenkbares plattenförmiges Element zum Verschließen der Serviceöffnung (20) aufweist.

2. Cabriolet-Fahrzeug nach Anspruch 1, **dadurch gekennzeichnet, dass** die Verdeckwanne (18) Teil der Karosseriestruktur ist.

3. Cabriolet-Fahrzeug nach Anspruch 1 oder 2, **dadurch gekennzeichnet, dass** die Verdeckwanne (18) in die Karosseriestruktur kraftschlüssig eingebunden ist.

4. Cabriolet-Fahrzeug nach Anspruch 3, **dadurch gekennzeichnet, dass** die Verdeckwanne (18) mit der Karosseriestruktur kraftschlüssig verschraubt ist.

5. Cabriolet-Fahrzeug nach einem der vorangehenden Ansprüche, **dadurch gekennzeichnet, dass** die Verdeckwanne (18) aus geschäumtem Metallwerkstoff hergestellt ist.

6. Cabriolet-Fahrzeug nach Anspruch 5, **dadurch gekennzeichnet, dass** die Verdeckwanne (18) aus Aluminium-Foam-Sandwich, AFS, hergestellt ist.

## Claims

1. Convertible car with a mid-engine (12) housed in an engine accommodating portion (16) comprising a convertible top tray (18) covering the engine accommodating portion (16), which convertible top tray is mounted to the body structure in a demountable manner, **characterized in that** the convertible top tray (18) is provided with a service opening (20) and a detachably mounted and/or pivoting plate-shaped element for closing the service opening (20).

2. Convertible car according to claim 1, **characterized in that** the convertible top tray (18) is part of the body structure.

3. Convertible car according to claim 1 or 2, **characterized in that** the convertible top tray (18) is linked to the body structure non-positively.

4. Convertible car according to claim 3, **characterized in that** the convertible top tray (18) is screwed to the body structure non-positively.

5. Convertible car according to one of the preceding claims, **characterized in that** the convertible top tray is made of foamed metal material.

6. Convertible car according to claim 5, **characterized in that** the convertible top tray (18) is made of aluminum foam sandwich, AFS.

## Revendications

1. Véhicule cabriolet à moteur central (12) dans une région de réception de moteur (16), comprenant un logement de capote (18) recouvrant la région de réception de moteur (16), le logement de capote (18) étant fixé de manière démontable à la structure de la carrosserie, **caractérisé en ce que** le logement de capote (18) présente une ouverture de service (20) et un élément en forme de plaque pouvant être fixé de manière amovible et / ou pivotante pour fermer l'ouverture de service (20).

2. Véhicule cabriolet selon la revendication 1 **caractérisé en ce que** le logement de capote (18) fait partie de la structure de la carrosserie.

3. Véhicule cabriolet selon la revendication 1 ou 2 **caractérisé en ce que** le logement de capote (18) est intégré à force dans la structure de la carrosserie.

4. Véhicule cabriolet selon la revendication 3 **caractérisé en ce que** le logement de capote (18) est vissé à force dans la structure de la carrosserie.

5. Véhicule cabriolet selon l'une quelconque des revendications précédentes **caractérisé en ce que** le logement de capote (18) est fabriqué en matériau métallique expansé.

6. Véhicule cabriolet selon la revendication 5 **caractérisé en ce que** le logement de capote (18) est fabriqué en AFS, sandwich en mousse d'aluminium.
